# EUROPEAN PATENT APPLICATION

(11) **EP 4 383 121 A1**
(43) Date of publication of application: **12.06.2024**
(21) Application number: 22211498.5
(22) Date of filing: 05.12.2022
(51) Int. Cl.: G06F 30/398, G06F 30/20, G06F 30/23, G06F 115/12, G06F 119/08

(54) **CONTROLLING AND MINIMIZING WARPAGE OF PRINTED CIRCUIT BOARDS, SUCH AS ASYMMETRIC EMBEDDED COMPONENT PCBS**

(71) Applicant: AT & S Austria Technologie & Systemtechnik Aktiengesellschaft, 8700 Leoben-Hinterberg (AT)
(72) Inventor: FREWEIN, Markus, 8010 Graz (AT); ZUENDEL, Julia, 8700 Leoben (AT); SCHULZ, Gernot, 8020 Graz (AT)
(74) Representative: Sykora & König Patentanwälte PartG mbB

(57) **Abstract**

A method of minimizing a warpage of a printed circuit board (1) having at least two layers (2, 3) stacked-up to a panel. The method comprises: providing a simulation model of the panel, in which first geometrical properties of said layers (2, 3) and of their constituent parts made of different materials are fixed, wherein second geometrical properties and physical and chemical properties of different materials used in each of said layers (2, 3) are independent variables in a parameter space of the simulation model; and wherein the simulation model is configured to receive input data including at least one point in the parameter space and at least one parameter of processing the panel and is configured to output data indicative of a geometric shape of the resulting panel. The method further comprises selecting a starting point in the parameter space; running a simulation beginning at the starting point; calculating a value of an objective function indicative of the panel warpage as a function of the output data of the simulation model; and iteratively optimizing the point in the parameter space of the simulation model and repeating the simulation so as to reduce the calculated value of the objective function until a minimum of the objective function value is achieved.

## Description

### FIELD OF THE INVENTION

The invention relates to a method, a computer program and a computer-readable medium for minimizing a warpage of a printed circuit board having at least two layers stacked-up to a panel. Furthermore, the invention relates to a printed circuit board manufactured in accordance with this method.

### BACKGROUND OF THE INVENTION

, For component carriers, especially comprising stacked layers, warpage of the panels during the manufacturing process is one of the main problems. An asymmetric PCB design caused by process requirements leads in combination with different temperaturedependent physical and chemical properties of the different constituent parts, such as electronic components, pure resin in the cavities, copper and the dielectric materials, to a more or less distinct deviation of the resulting panel from an ideal planar geometric shape. As a consequence, PCB panels showing warpage beyond an acceptable level have to be sorted out at the end of the manufacturing process, which means a huge waste of manufacturing resources.

The better one can balance the discrepancies in the stiffness and in the coefficient of thermal expansion (CTE) of different layers in the PCB design, the less the ultimate warpage might be. However, the cooperation of electronic components having, in comparison, a very high stiffness and a small CTE, the chemical shrinkage of the pure resin showing only little stiffness in the course of curing out in the cavities, and the properties of the prepreg- and core-layers which depend on the resin content, makes an estimation of the required dielectric properties difficult or even impossible.

In the prior art, attempts have been made to minimize warpage of PCB panels by adjusting individual material properties of one or a few selected sealing and/or insulating layer structures comprised in the stack. To this end, also predictions based on computer modeling or simulations which take into account such selected layer properties have been used.

For example, US 2014/0285979 A1 discloses a method of fabricating an asymmetric printed circuit board with minimized warpage, the method comprising: creating a stack of layers, wherein the stack of layers includes a top layer and a bottom layer; identifying, in the stack of layers, an area that includes resin; and applying one or both of electromagnetic radiation and pressure to the identified area that includes resin, thereby increasing the degree of curing of at least a portion of the resin included in the identified area. An increase in the degree of curing of the resin included in the stack of layers may result in a change in a coefficient of thermal expansion (CTE) for at least a portion of the identified area that includes resin. Specifically, the amount of electromagnetic radiation and pressure applied to the area that includes resin are based, at least in part, on one or more of a recommended set point for the resin, dwell time for the resin, ramp rate for the resin, and warpage predicted by computer modeling.

Further, US 2019/0139848 A1 proposes a method of manufacturing a component carrier, the method comprising: embedding a component in a stack comprising at least one electrically conductive layer structure and at least one electrically insulating layer structure; sealing at least a part of the component with regard to material of the stack by a sealing structure; and configuring the sealing structure to reduce stress between the component and the stack. Specifically, the method comprises simulating a stress behavior of the component carrier with the sealing structure and modifying the configuration of the sealing structure when the simulation indicates a reduction of the stress with the modified configuration; wherein the method further comprises configuring the sealing structure based on one or a combination of the criteria of at least partially balancing a mismatch between a value of a coefficient of thermal expansion (CTE) of the component and a CTE value of the at least one electrically insulating layer structure, and at least partially balancing a mismatch between respective values of a Young modulus of the component and of the at least one electrically insulating layer structure; and wherein the method further comprises considering as a criterion for configuring the sealing structure a shrinkage behavior of a material of the at least one electrically insulating layer structure.

Similarly, also JP 2020-038924 A proposes a method for simply selecting a material for a panel to be used to manufacture a semiconductor package, from which material a panel having a sufficiently small curvature amount can be manufactured. To this end, the document proposes for a panel including a rear face coat layer, many semiconductor elements, a sealing layer and an insulation layer, a step of constructing a virtual model of a panel to which characteristics of materials constituting only the rear face coat layer, the sealing layer and the insulation layer are input. Based on calculating a curvature amount of such a restricted virtual model, individual characteristics of those materials constituting the rear face coat layer, the sealing layer and the insulation layer are grasped which affect the curvature amount of the panel. On the basis of the information grasped in this step, at least one of these materials is then newly selected so as to reduce the curvature amount of the virtual model.

### DESCRIPTION OF THE INVENTION

It is an objective of the invention to provide an alternative and/or improved method of minimizing a warpage of a printed circuit board (PCB) having at least two layers stacked-up to a panel. It is a further objective of the invention to provide a most reliable and/or robust method of designing and manufacturing printed circuit boards based on warpage control. It is a further objective of the invention to provide a method of controlling and minimizing a warpage for asymmetric embedded component PCB concepts.

These objectives are achieved by the subject-matter of the independent claims. Further exemplary embodiments are evident from the dependent claims and the following description.

A first aspect of the invention relates to a method for minimizing a warpage of a printed circuit board (PCB) having at least two layers stacked-up to a panel.

The at least two layers may comprise at least one insulating layer and at least one electrically conductive layer. Preferably, the at least two layers comprise at least one recess, more preferably at least one electronic component is inserted/embedded into the at least one recess. The at least one electronic component may include semiconductor chips, integrated circuits (IC), application specific integrated circuits (ASIC), substrates provided with conducting paths, a filter, a signal processing component, a power management component (such as a field-effect transistor (FET), metal-oxide-semiconductor field-effect transistor (MOSFET), complementary metal-oxide-semiconductor (CMOS), junction field-effect transistor (JFET), or insulated-gate field-effect transistor (IGFET), an optoelectronic interface element, a light emitting diode, a photocoupler, a voltage converter (for example a DC/DC converter or an AC/DC converter), a cryptographic component, a transmitter and/or receiver, an electromechanical transducer, a sensor, an actuator, a microelectromechanical system (MEMS), a microprocessor, a capacitor, a resistor, an inductance, a battery, a switch, a camera, an antenna, a logic chip, and an energy harvesting unit, or any particular elements of electronic circuits. Electronic components may be, for example, integral parts of the respective layer or be embedded therein by means of cavities filled with a suitable filling material.

The at least one insulating layer may include one or more layers of similar or different types, such as one or more organic layers or any other type of insulating, cover or sealing layers. An organic layer may be a layer made of an organic compound with and without embedded reinforcing fillers/structures or with fillers such as fibers or spheres and/or a prepreg layer. Prepregs are known in the art as composite materials made from pre-impregnated fibers and a polymer matrix which is only partially cured, so as to allow the prepreg to be ultimately cured to its final shape during the manufacturing process of the panel, which may, for instance, require a predetermined value of elevated temperature and/or pressure.

The method may be a computer-implemented method, which may be performed automatically by a suitable control unit, e.g. by loading and running a corresponding computer program in a processor of the control unit.

According to an embodiment of the invention, the method comprises providing a simulation model of the panel. In this simulation model, first geometrical properties (e.g. all except thickness values) of each of the above-mentioned layers of the panel and of their constituent parts made of different materials are fixed to pre-defined values. For example, such pre-fixed first geometrical properties of the simulation model of the PCB panel may include lateral dimensions and lateral shapes of each layer and its constituent parts, such as cavities etc., and/or those thickness values which are not variable.

On the other hand, second geometrical properties and individual physical and chemical properties of different materials used in each of the layers are defined as independent variables in a parameter space of the simulation model. The second geometrical properties may, for example, describe those remaining geometrical properties of the stack which are not pre-fixed as first geometrical properties and which may be particularly relevant for warpage. For instance, thickness values of one or more layers or of one or more of their constituent parts may be such second geometrical properties, i.e. be accounted for as independent variables in the parameter space of the simulation model.

Similarly, all those physical and chemical properties of ideally all of the different materials used in each of the layers of the panel which are relevant for warpage may be accounted for as independent variables in the parameter space of the simulation model. Among such physical and chemical properties there may, for example, be a coefficient of thermal expansion (CTE) and/or Young's modulus and/or absolute or relative shrinkage of these materials. Furthermore, one or more of these physical parameters, e.g. the shrinkage values, may be defined as additionally depending on at least one parameter of processing the panel, such as environmental or applied temperature or pressure etc. For example, physical and chemical properties and/or process parameters of this kind may be adaptable by changing the type of the respective material or, for instance, by varying the resin content of materials containing resin. Also, temperature-dependencies of materials of the at least two layers may be physical properties.

According to an embodiment of the invention, the simulation model is configured to receive input data including at least one point in the parameter space (such as an initially selected starting point or, subsequently, an automatically adapted point as described below) and at least one parameter of processing the panel. As an output, the simulation model is configured to output data indicative of a geometric shape of the resulting panel. To this end, the simulation model may, for example, be based on a computer-implemented finite element method (FEM).

According to an embodiment of the invention, the method further comprises the steps of selecting a starting point in the parameter space of the simulation model; running a simulation of the simulation model beginning at the selected starting point; calculating a value of an objective function indicative of the panel warpage as a function of the output data of the simulation model; and iteratively optimizing the point in the parameter space of the simulation model and repeating the steps of running the simulation and of calculating the objective function value, so as to reduce the calculated value of the objective function. This iteration process may be, for instance, performed until a minimum of the objective function value is achieved.

The iterative optimization may comprise the step of definition of the optimized values of the point in the parameter space, for example through a human being interaction and/or in an automatic way. For example, the definition of the optimized values may be performed by a machine learning algorithm and/or a machine learning module. The machine learning algorithm and/or module may be trained in a learning step, in which an operator, i.e. human being, interacts indicating the optimized points.

With the simulation model as described herein above and below, the expansion behavior of the at least one insulating layer and the at least one electrically conductive layer (such as all prepreg- and core-layers comprised in the stack), which leads to the ultimate warpage of the panel, may be calculated, and the results may be transferred to a real PCB. This allows to use materials with precisely tailored physical and chemical properties and dimensions in order to manufacture a PCB panel with a perfectly balanced material combination throughout the whole stack.

In contrast to the known approaches, which are only focusing at one or just a few selected materials among the insulation or sealing materials used in the stack, the present method employs a comprehensive (i.e. full or complete) simulation model which takes into account possibly all the different material and geometric properties which are relevant for the warpage behavior of the stack during the manufacturing process of the panel. In particular, in contrast to the prior art, also the relevant physical and geometric properties of (ideally all of) the different materials used in the at least one electrically conductive layer can be taken into account in the simulation model in a most comprehensive/complete manner in order to obtain a point in the parameter space resulting in a minimal warpage.

In other words, in the parameter space of the simulation model according to the present method, different properties of all the layers within the stack which may possibly contribute to the warpage of the resulting panel may be accounted for in a most homogeneous or equal manner, making it possible to determine an ideal point in the parameter space, which yields a minimized warpage of the resulting panel. Moreover, with such a full/comprehensive/complete parameter space of the simulation model, the iterative optimization may be performed in a most effective manner, in contrast to known approaches which focus on just one or only a few selected properties or materials at a time. In particular, physical and chemical properties and second geometrical properties of the at least one electrically conductive layer in its entirety and/or of its constituent parts, such as the electronic components themselves, may be subjected to the iterative optimization by the method proposed herein.

The method according to the present invention allows to avoid a huge waste of both material and time resources, which would be otherwise needed to determine an optimal configuration of the stack to obtain a PCB panel with a minimized warpage by trial-and-error manufacturing of a large number of real PCB panels with varying material combinations, where the optimization would need to be performed by estimating the warpage of each real panel and by trying to guess which parameters are to be varied, which is extremely inefficient in comparison with the method of the present invention.

According to an embodiment of the invention, the at least one insulating layer comprises at least one organic layer, such as a prepreg-layer. As mentioned above, prepregs are known in the art as composite materials made from pre-impregnated fibers in a polymer matrix which is only partially cured, so as to allow the prepreg to be ultimately cured to its final shape during the manufacturing process of the panel, which may, for instance, require an application of elevated temperature and/or pressure raised to a predetermined value. In this embodiment, the at least one parameter of processing the panel (such parameter or parameters being a part of the input of the simulation model) includes at least one parameter characterizing a duration of a process of curing and/or of laminating the at least one prepreg-layer with other layers of the stack and/or of environmental conditions, such as environmental or applied pressure and/or temperature, in particular during this process.

According to an embodiment of the invention, physical and chemical properties of said at least one insulating layer are independent variables in the parameter space of the simulation model. Thus, such physical and chemical properties are adaptable in the iterative optimization step of the method as proposed herein. For example, a shrinkage of a resin of an organic layer during the curing process may be a chemical property.

According to an embodiment of the invention, the at least one electrically conductive layer or at least one of several electrically conductive layers is a laminate material layer including one or more cavities filled with a filling material (such as a resin material, an adhesive material and/or a sealing material). It may be that one or more electronic components are embedded in the respective cavity, for example by means of said filling material. As laminate material, basically any type of material suitable for the purpose of forming an electrically conductive layer, e.g. any material of this kind known as such in the art, may be used and subjected to the optimization method proposed herein. As mentioned above, the electronic components embedded in such cavities may, for example, be semiconductor chips, e.g. integrated circuits (IC) or application specific integrated circuits (ASIC), substrates provided with conducting paths, or any specific elements of electronic circuits.

According to an embodiment of the invention, physical and chemical properties of said at least one electrically conductive layer are independent variables in the parameter space of the simulation model. In this embodiment, individual physical and chemical properties of the laminate material and/or the filling material and/or the electronic component and/or their respective thickness values in a direction perpendicular to a panel plane may be independent variables in the parameter space of the simulation model. Thus, also such physical and chemical properties and/or thickness values are adaptable in the iterative optimization step of the method as proposed herein.

According to an embodiment of the invention, the simulation model is a time-dependent model. This means that each simulation run comprises a dynamic process including chemical and/or physical changes of the panel, in particular under varying environmental conditions whose initial values and/or variation rate may be comprised in the input data of the simulation model as above-mentioned parameters of processing the panel. Thereby, the warpage of the resulting panel may be investigated in a most rigorous and thorough way. For example, such a dynamic process may include a heat-up and/or a cool-down process.

The value of the objective function, which is indicative of the panel warpage, may, for example, be obtained by integrating a deviation of a surface of the resulting panel or of one or more of its layers from a planar surface geometry. To this end, the integral can be taken over an overall extension of such a surface, which may, for instance, be a front surface or both, front and rear surfaces of the resulting panel and/or of one or more of its constituent layers. Thereby, the warpage of the resulting panel may be determined in a most rigorous and thorough manner.

According to an embodiment of the invention, the above-mentioned minimum of the objective function to be achieved is approximately zero. Thereby, the problem of warpage may be solved in a most thorough manner.

The method proposed herein is especially well-suited for asymmetric embedded component PCBs, which are particularly prone to warpage due to their asymmetric design. Due to its inherent thoroughness, this method is significantly better suited to overwhelm the discrepancies within the PCB stack caused by its asymmetric design than conventional methods known in the art.

In particular, the above-mentioned physical and chemical properties of the different materials used in each of the layers of the stack may be physical and chemical properties relevant for warpage of the resulting panel, such as a coefficient of thermal expansion (CTE) and/or Young's modulus and/or absolute or relative shrinkage depending on the at least one parameter of processing the panel.

According to an embodiment of the invention, also initial thickness values of at least some of the layers comprised in the stack and/or of their constituent parts made of different materials in a direction perpendicular to a panel plane are defined as independent variables in the parameter space of the simulation model, i.e. as the above-mentioned second geometrical properties of the simulation model. Thus, these thickness values are adaptable in the iterative optimization step of the method as proposed herein.

The method proposed herein may, in particular, further include a step of manufacturing a printed circuit board panel according to the point in the parameter space of the simulation model which corresponds to the minimum of the objective function achieved by the iterative optimization. Thereby, the results of the optimization may be directly transferred/applied to a real PCB, i.e. to manufacture a printed circuit board exhibiting minimal or even approximately absent warpage. This, in particular, allows to minimize a material and other kinds of waste known from conventional manufacturing processes of printed circuit boards due to the warpage problem. Moreover, by manufacturing printed circuit board panels in accordance with the method proposed herein, the warpage problem may be solved in a most reliable and time-efficient way.

Further aspects of the invention relate to a computer program for minimizing a warpage of a printed circuit board having at least two layers stacked-up to a panel, which computer program, when being executed by a processor, is adapted to carry out the steps of the method as described above and in the following as well as to a computer-readable medium, in which such a computer program is stored.

For example, the computer program may be executed in a processor of a control unit, which is provided and configured to perform the method. The computer-readable medium may be a memory of this control unit.

In general, a computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g. the Internet, which allows downloading a program code. The computer-readable medium may be a non-transitory or transitory medium.

A further aspect of the invention relates to a printed circuit board comprising at least two layers, for example at least one insulating layer and at least one electrically conductive layer, stacked-up to a panel, wherein the printed circuit board is manufactured according to the method as proposed above and below. As already mentioned further above, the printed circuit board may, in particular, be an asymmetric embedded component PCB.

According to an embodiment of the invention, the at least one electrically conductive layer or at least one of several electrically conductive layers of the printed circuit board is a laminate material layer which includes one or more cavities filled with an filling material. It may be that one or more electronic components are embedded in the respective cavity, for example by means of said filling material.

It has to be understood that features of the method as described above and in the following may be features of the computer program, the computer-readable medium and the printed circuit board as described above and in the following, and vice versa.

These and other aspects of the invention will be apparent from and elucidated with reference to the embodiments described hereinafter.

### BRIEF DESCRIPTION OF THE DRAWINGS

Below, embodiments of the present invention are described in more detail with reference to the attached drawings.
Fig. 1 schematically shows a top view of a printed circuit board according to an embodiment of the invention, wherein an enlarged portion shows several electronic components embedded in respective cavities within at least one electrically conductive layer.
Fig. 2 schematically shows an exploded cross-sectional view of a portion of the printed circuit board of Fig. 1, before resin is filled in a respective cavity and before lamination of the stack.
Fig. 3 schematically shows a cross-sectional view of the portion of the printed circuit board of Fig. 2 after lamination and with resin filled in the cavity.
Fig. 4 schematically shows another example of a cross-sectional view of a portion of the printed circuit board of Fig. 1 (after lamination and with resin filled in the cavity).
Fig. 5a/5b shows graphical diagrams representing the output of the simulation model of the method according to an embodiment of the invention after an initial run (Fig. 5a) and after a subsequent run of the simulation after several steps of iterative optimization (Fig. 5b).
Fig. 6 shows a flow diagram of a method according to an embodiment of the invention for minimizing a warpage of a printed circuit board of Fig. 1 having at least one insulating layer and at least one electrically conductive layer stacked-up to a panel.

The reference symbols used in the drawings, and their meanings, are listed in summary form in the list of reference symbols.

### DETAILED DESCRIPTION OF EXEMPLARY EMBODIMENTS

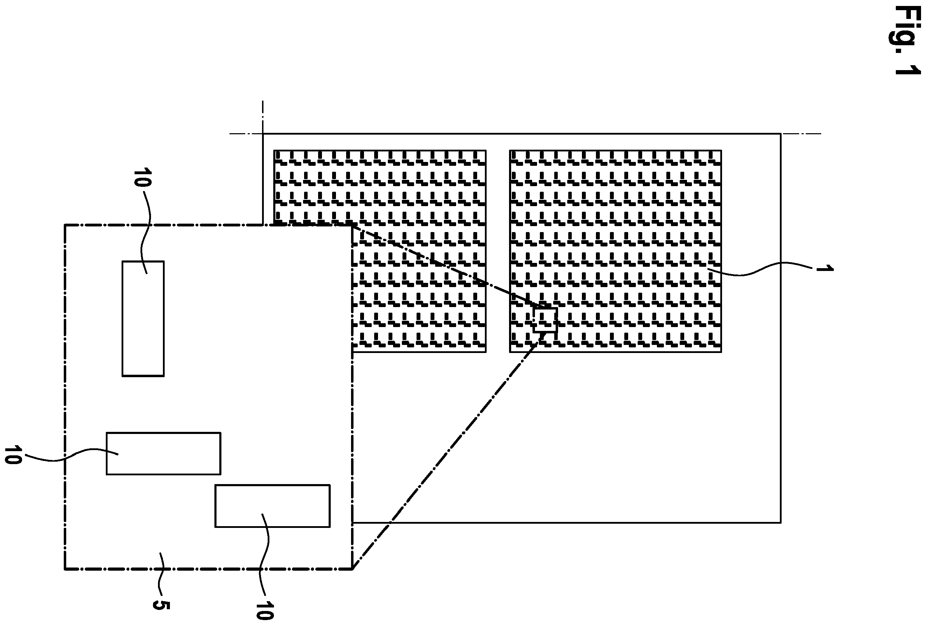

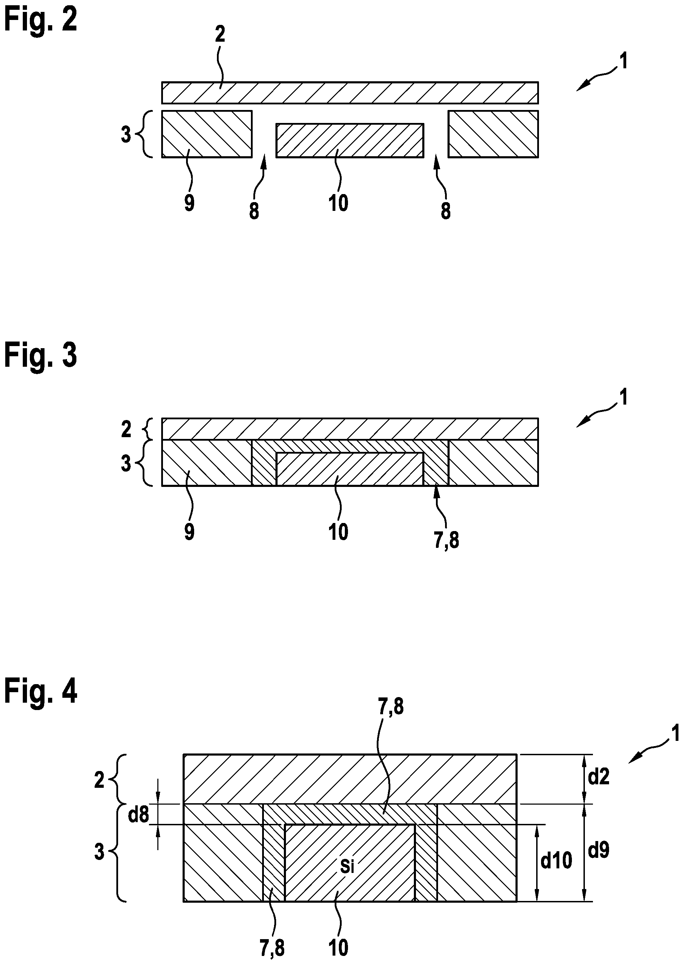

Fig. 1 schematically shows a top view of a printed circuit board 1 according to an embodiment of the invention, whose design and manufacturing process are to be optimized by a method according to an embodiment of the invention in order to minimize its warpage. The printed circuit board 1 is also referred to as a panel, PCB, PCB panel, or stack herein above and below. It comprises at least one insulating layer 2 and at least one electrically conductive layer 3 stacked-up to a panel, which are only schematically illustrated in the cross-sectional views of Figs. 2, 3 and 4 described below. In Fig. 1, an enlarged portion 5 of the printed circuit board 1 shows several electronic components 10 embedded in respective cavities within the at least one electrically conductive layer 3.

Fig. 2 schematically shows, in an exploded cross-sectional view, a portion of the printed circuit board of Fig. 1 as a so-called "press build-up" in its state before an filling material 7 shown in Fig. 3 (here resin, by way of example only) is filled in a respective cavity 8 and before the at least one insulating layer 2 and the at least one electrically conductive layer 3 of the stack are laminated together to form the panel 1 by applying elevated pressure and/or temperature.

By way of example only, in Fig. 2-4, the at least one insulating layer 2 is shown as a single prepreg layer as described in more detail herein above. Also, by way of example only, the at least one electrically conductive layer 3 is shown as a single layer of laminate material 9 within which one or more cavities 8 to be filled with an filling material 7 (cf. Fig. 3 and 4) are formed, in order to embed one or more electronic components 10 in the respective cavity 8 by means of the filling material 7. As mentioned above, the electronic components 10 may, for example, be semiconductor chips, e.g. carrying integrated circuits (IC) or application specific integrated circuits (ASIC), substrates provided with conducting paths, or any specific elements of electronic circuits.

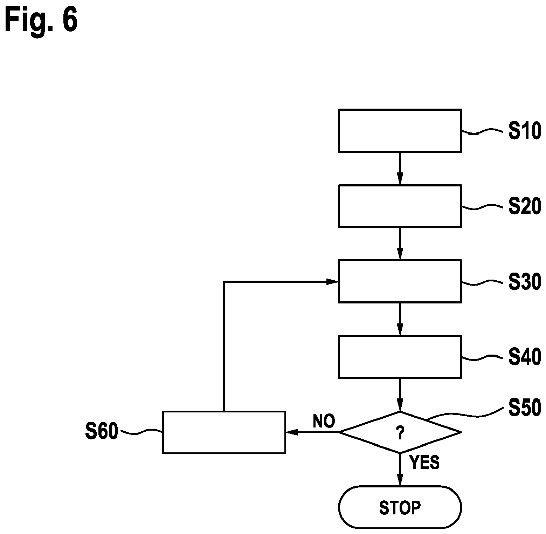

Fig. 3 shows the press build-up of Fig. 2 after lamination and with resin filled in the cavity 8. According to the method of the present invention as described in more detail herein above and below, in particular with reference to Fig. 6, physical and chemical properties of the prepreg-layer 2 as well as of the laminate material 9 and/or the filling material 7 and/or the electronic component 10 and/or their respective thicknesses d2, d9, d7, d10 (cf. Fig. 4) in a direction perpendicular to a panel plane may be defined as independent variables in the parameter space of the simulation model of the panel 1. Thus, as mentioned above, these values are adaptable in the iterative optimization step of this method so as to minimize the warpage of the resulting PCB panel 1 of Fig. 1.

Furthermore, at least one parameter of processing the panel 1 may also be a part of the input of this simulation model and include at least one parameter characterizing a duration of a process of curing and/or of laminating the prepreg-layer 2 with other layers of the stack and/or environmental conditions, such as environmental or applied pressure and/or temperature, during this process.

Fig. 4 schematically shows another example of a cross-sectional view of a portion of the printed circuit board 1 of Fig. 1 after lamination of the stack and with filling material 7 filled in the cavity 8. Fig. 4 illustrates the respective thicknesses d2, d9, d7, d 10 (cf. Fig. 4) of the prepreg-layer 2 and/or of the laminate material 9 and/or of the filling material 7 and/or of the respective electronic component 10 of the electrically conductive layer 3 in a direction perpendicular to a panel plane, which may be partially pre-fixed as the above-mentioned first geometrical properties and partially be variable as independent variables in the parameter space of the simulation model of the panel 1.

Fig. 6 shows an example of a flow diagram of a method according to an embodiment of the invention, for minimizing a warpage of a printed circuit board (PCB) having at least one insulating layer and at least one electrically conductive layer stacked-up to a panel. In the following, the method will be illustrated with reference to the example of PCB panel 1 as described above with reference to Figs. 1-4. The method may be a computer-implemented method performed automatically in a suitable control unit (not shown).

In a first step S10 of the method, a simulation model of the panel 1 is provided. This step may, for example, be realised by downloading a computer program which includes the simulation model into the control unit, which is provided to perform the method. In the simulation model, first geometrical properties of each of the above-mentioned layers 2 and 3 of the panel 1 and of their constituent parts made of different materials are fixed to pre-defined values. For example, such pre-fixed first geometrical properties of the simulation model of the PCB panel 1 may include lateral dimensions and shapes of each layer 2, 3 and of its constituent parts, such as cavities 8 or electronic components 10, and/or some of the thickness values d2, d8, d9, d10 (cf. Fig. 4).

On the other hand, second geometrical properties and individual physical and chemical properties of different materials used in each of the layers 2, 3 are defined as independent variables in a parameter space of the simulation model. The second geometrical properties may, for example, describe those remaining geometrical properties of the stack, which are not pre-fixed as first geometrical properties of the stack and which may be relevant for warpage. For instance, some of the thickness values d2, d8, d9, d10 of one or more layers 2, 3 or of one or more of their constituent parts may be such second geometrical properties, i.e. be accounted for as independent variables in the parameter space of the simulation model.

Similarly, all those physical and chemical properties of ideally all of the different materials used in each of the layers 2 and 3 of the panel 1 which are relevant for warpage may be accounted for as independent variables in the parameter space of the simulation model. Among such physical and chemical properties there may, for example, be a coefficient of thermal expansion (CTE) and/or Young's modulus and/or absolute or relative shrinkage of each of these materials. Furthermore, one or more of these physical parameters, e.g. the shrinkage values, may be defined as additionally depending on at least one parameter of processing the panel 1, such as environmental or applied temperature or pressure etc. For example, physical and chemical properties and/or process parameters of this kind may be adaptable by changing the type of the respective material or, for instance, by varying the resin content of materials containing resin.

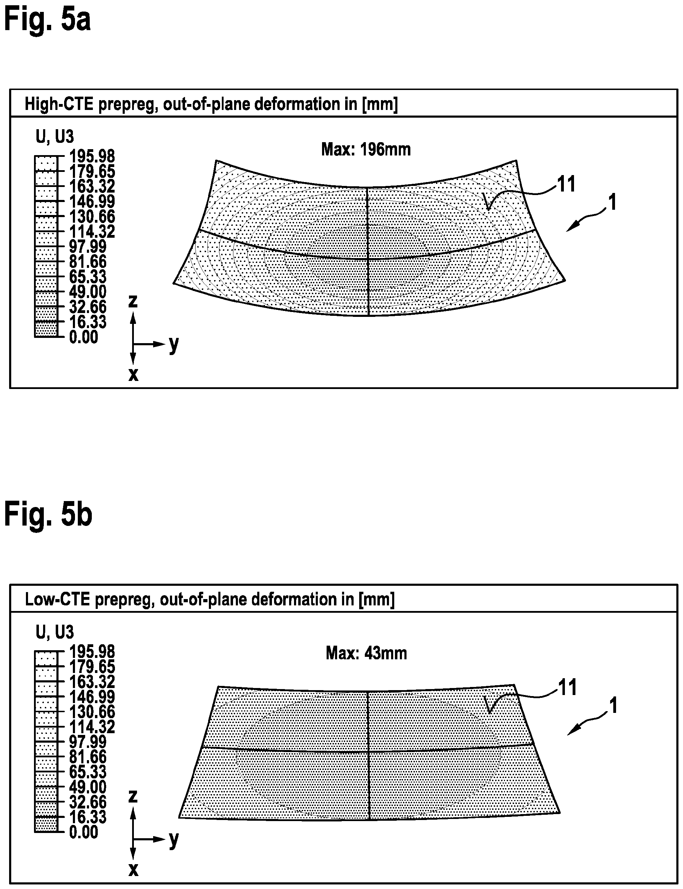

The simulation model provided in step S10 is configured to receive input data including a point in the parameter space and at least one parameter of processing the panel 1, as mentioned above. The simulation model is configured to output data indicative of a geometric shape of the resulting panel 1, for example as illustrated in Fig. 5a and 5b, which will be described further below.

In a second step S20 of the method, a starting point in the parameter space of the simulation model is selected. This may be done, for example, by pre-setting the above-mentioned independent variables to initial values, which may e.g. be known from real experiments or be just arbitrary values.

In a subsequent third step S30, a simulation is performed for this point in the parameter space of the simulation model.

In a further step S40, a value of an objective function is calculated, which is indicative of the panel warpage and is defined as a function of the output data of the simulation model. This value may, for example, be obtained by integrating a deviation of a surface of the resulting panel 1 or of one or more of its layers from a perfect, e.g. a planar surface geometry. For example, the integral can be taken over an overall extension of such a surface 11, which may be a front surface of panel 1 as depicted in Fig. 5a and 5b.

In a subsequent step S50, the calculated value of the objective function may be compared with a pre-defined minimum warpage value and/or with any other suitable value(s) in order to determine whether a minimum warpage of the panel 1 is already achieved or not yet achieved.

In a step S60, depending on the result of this comparison, the point in the parameter space of the simulation model may then be iteratively optimized so as to reduce the calculated value of the objective function. The steps S30 through S60 are then repeated in a cyclic manner until a minimum of the objective function value is achieved according to the assessment made in step S50. Therefore, in particular, the assessment in step S50 may be performed by comparing the calculated value of the objective function with one or more of its values obtained in previous iteration steps, so that the iteration may be finished as soon as the achieved reduction of this value is below a pre-defined threshold.

With the simulation model as described herein above and below, the expansion behaviour of the at least one insulating layer 2 and the at least one electrically conductive layer 3, which leads to the ultimate warpage of the panel 1, may be calculated in a most thorough and rigorous manner. This allows to use materials with precisely tailored physical and chemical properties and dimensions in order to manufacture a PCB panel 1 with a perfectly balanced material combination throughout the whole stack.

In contrast to the known approaches, which are only focusing at one or just a few selected materials among the insulation or sealing materials used in the stack, the present method employs a comprehensive (i.e. full or complete) simulation model which allows to take into account all the different material and geometric properties which are relevant for the warpage behaviour of the stack during the manufacturing process of the panel.

Figures 5a and 5b show graphical diagrams representing the output of the simulation model of the method according to an embodiment of the invention after an initial run (Fig. 5a) and after an exemplary subsequent run of the simulation, which may, for example, be obtained after several steps of the iterative optimization (Fig. 5b). As shown in Fig. 5a, after an initial run of the simulation model, a surface 11, which may be a front surface of the resulting panel 1, exhibits a relatively distinct warpage, i.e. a deviation from an ideal planar shape. As shown in Fig. 5b, after several optimization steps S60 as described above, the warpage of the resulting panel 1 is already significantly reduced, the maximum deviation from a planar shape being only 43 mm. However, a still further reduction of warpage may be achieved by further optimization steps in the iterative manner, until a minimal warpage of, for example, nearly zero is determined in step S50 of Fig. 6.

### LIST OF REFERENCE SYMBOLS

- 1: printed circuit board, also referred to as a panel, PCB, PCB panel, or stack
- 2: at least one insulating layer, in particular prepreg-layer
- 3: at least one electrically conductive layer
- 5: enlarged portion of the printed circuit board
- 7: filling material, in particular resin
- 8: cavity
- 9: laminate material
- 10: electronic component
- 11: surface of the panel showing warpage
- d2: thickness of the at least one insulating layer, in particular prepreg-layer
- d8: thickness of the filling material in the cavity
- d9: thickness of the laminate material
- d10: thickness of the electronic component

## Claims

1. A method of minimizing a warpage of a printed circuit board (1) having at least two layers (2, 3) stacked-up to a panel, the method comprising:
providing a simulation model of the panel, in which simulation model first geometrical properties of said layers (2, 3) and of their constituent parts made of different materials are fixed to pre-defined values, wherein second geometrical properties and physical and chemical properties of different materials used in each of said layers (2, 3) are defined as independent variables in a parameter space of the simulation model;
wherein the simulation model is configured to receive input data including at least one point in the parameter space and at least one parameter of processing the panel and is configured to output data indicative of a geometric shape of the resulting panel;
selecting a starting point in the parameter space of the simulation model;
running a simulation of the simulation model beginning at the starting point;
calculating a value of an objective function indicative of the panel warpage as a function of the output data of the simulation model; and
iteratively optimizing the point in the parameter space of the simulation model and repeating the simulation so as to reduce the calculated value of the objective function until a minimum of the objective function value is achieved.

2. The method of claim 1, wherein
the at least two layers (2,3) comprise at least one insulating layer (2);
wherein the at least one insulating layer (2) comprises at least one organic layer; and/or
the at least one parameter of processing the panel includes at least one parameter characterizing a duration of a process of curing and/or laminating the at least one organic layer with other layers of the stack and/or environmental conditions.; and/or
physical and chemical properties of said at least one insulating layer (2) are independent variables in the parameter space of the simulation model.

3. The method of claim 1 or 2, wherein
the at least two layers (2,3) comprise at least one electrically conductive layer (3);
the at least one electrically conductive layer (3) is a laminate material layer which includes one or more cavities (8) filled with an filling material (7), and/or one or more electronic components (10) being embedded in the respective cavity (8) by means of said filling material (7); and
physical and chemical properties of said laminate material (9) and/or said filling material (7) and/or said electronic component (10) and/or the respective thickness values (d9, d8, d10) of said laminate material (9) and/or said filling material (7) and/or said electronic component (10) in a direction perpendicular to a panel plane are independent variables in the parameter space of the simulation model.

4. The method of one of the previous claims, wherein
the simulation model is time-dependent in that each simulation run comprises a dynamic process including chemical and/or physical changes of the panel, in particular under varying environmental conditions whose initial values and/or variation rate are comprised in the input data of the simulation model; and
the dynamic process preferably includes a heat-up and/or cool-down process.

5. The method of one of the previous claims, wherein
the value of the objective function is indicative of the panel warpage and is obtained by integrating a deviation of a surface (11) of the resulting panel or of one or more of its layers (2, 3) from a planar surface geometry;
said integral being taken over an overall extension of said surface (11).

6. The method of one of the previous claims, wherein
said minimum of the objective function to be achieved is approximately zero.

7. The method of one of the previous claims, wherein
said printed circuit board panel is an asymmetric embedded component PCB.

8. The method of one of the previous claims, wherein
said physical and chemical properties of the different materials used in each of said layers (2, 3) are physical and chemical properties relevant for warpage of the resulting panel, such as a coefficient of thermal expansion and/or Young's modulus and/or absolute or relative shrinkage depending on the at least one parameter of processing the panel.

9. The method of one of the previous claims, wherein
initial thickness values (d2, d9, d8, d10) of at least some of said layers (2, 3) and of their constituent parts made of different materials in a direction perpendicular to a panel plane are independent variables in the parameter space of the simulation model.

10. The method of one of the previous claims, further including
a step of manufacturing said printed circuit board panel according to the point in the parameter space of the simulation model which corresponds to the minimum of the objective function.

11. A computer program for minimizing a warpage of a printed circuit board (1) having at least two layers (2, 3) comprising stacked-up to a panel, which computer program, when being executed by a processor, is adapted to carry out the steps of the method of one of the previous claims.

12. A computer-readable medium, in which a computer program according to claim 11 is stored.

13. A printed circuit board (1), comprising:
at least two layers (2, 3) stacked-up to a panel;
wherein the printed circuit board (1) is manufactured according to a method of claim 10.

14. The printed circuit board (1) of claim 13, wherein
the at least two layers (2,3) comprise at least one electrically conductive layer (3), which is a laminate material layer which includes one or more cavities (8) filled with an filling material (7), and/or
wherein one or more electronic components (10) are embedded in the respective cavity (8) by means of said filling material (7).
